# EUROPÄISCHE PATENTANMELDUNG

(11) **EP 2 647 735 A1**
(43) Veröffentlichungstag der Anmeldung: **09.10.2013**
(21) Anmeldenummer: 13158282.7
(22) Anmeldetag: 08.03.2013
(51) Int. Cl.: C23C 2/02, C23C 2/26, C23C 2/28, C23C 10/02, C23C 10/06, C23C 10/10, C23C 10/34, C23C 10/60, C23C 28/00, F01D 5/28

(54) **Aluminid- oder Chromidbeschichtungen von Hohlräumen**

(30) Priorität: 03.04.2012 DE 102012006654
(71) Anmelder: MTU Aero Engines AG, 80995 München (DE)
(72) Erfinder: Pillhöfer, Horst, 85244 Röhrmoos (DE); Morant, Max, 83229 Aschau (DE); Mueller, Stefan, 80634 München (DE); Kliewe, Anja, 82256 Fürstenfeldbruck (DE)

(57) **Zusammenfassung**

Die vorliegende Erfindung betrifft ein Verfahren zum Herstellen legierter, insbesondere mehrfach legierter Aluminid- oder Chromidschichten auf einem Bauteil mittels Alitieren oder Inchromieren, bei welchem auf dem zu beschichtenden Bauteil (1) zunächst eine Grünlingsschicht (9) aus einem Bindemittel (5) und Metallpartikeln (7) abgeschieden wird und anschließend eine Alitierung oder Inchromierung durchgeführt wird, wobei Bindemittel und Metallpartikel getrennt voneinander auf dem Bauteil abgeschieden werden, wobei zuerst das Bindemittel aufgebracht wird und nachfolgend die Metallpartikel auf oder in der Bindemittelschicht abgeschieden werden sowie ein Turbinenbauteil das mit dem entsprechenden Verfahren hergestellt worden ist.

## Beschreibung

### GEBIET DER ERFINDUNG

Die vorliegende Erfindung betrifft die Herstellung von legierten, insbesondere mehrfach legierten Aluminid- oder Chromidschichten auf einem Bauteil mittels Alitieren oder Inchromieren sowie insbesondere dadurch hergestellte Bauteile, insbesondere Turbinenbauteile einer Gasturbine, insbesondere eines Flugtriebwerks.

### STAND DER TECHNIK

Bauteile in Gasturbinentriebwerken, die hohen Temperaturen und chemisch aggressiven Umgebungen ausgesetzt sind, werden durch Beschichten oder Oberflächenbehandlung derart angepasst, dass sie den entsprechenden Umgebungen widerstehen können. Zu diesem Zweck ist es beispielsweise bekannt Diffusionsüberzüge bzw. Diffusionsbeschichtungen in Form von Aluminid-Schichten oder Chromid-Schichten zu erzeugen. Hierzu stehen verschiedene Verfahren zur Verfügung, wie dies beispielsweise in der DE 602004012039 T2 bzw. der EP 1 528 117 B1 beschrieben ist.

Bei der Herstellung von derartigen Aluminid- bzw. Chromid-Schichten ist es möglich Legierungsbestandteile in die Aluminid- bzw. Chromid-Schicht einzubauen, wenn die entsprechenden Legierungsbestandteile vor dem Alitieren oder Inchromieren in Form von Metallpartikeln auf der Oberfläche des zu bearbeitenden Bauteils abgeschieden werden. Zu diesem Zweck werden sogenannte Grünlingsschichten auf den zu behandelnden Bauteilen abgeschieden, die die Metallkomponenten enthalten, die in eine entsprechende Aluminid-oder Chromid-Schicht eingebaut werden sollen. Dies wird beispielsweise durch Aufspritzen von Mischungen aus BindemitteIn und Pulvern ermöglicht. Beim nachfolgenden Alitieren bzw. Inchromieren wird das Bindemittel ausgetrieben bzw. dient als Aktivator, wie in der DE 60 2004 012 039 T2 beschrieben, und die Metallkomponenten werden in die Aluminid- bzw. Chromidschicht eingebaut.

Problematisch ist ein derartiges Verfahren jedoch für Innenräume von hohlen Turbinenschaufeln, da insbesondere aufgrund von Hinterschneidungen oder mangelndem direkten Zugang zu den Innenräumen oder Hohlräumen ein entsprechendes Aufbringen der Grünlingsschicht mittels Spritzen nicht möglich ist.

### OFFENBARUNG DER ERFINDUNG

### AUFGABE DER ERFINDUNG

Es ist deshalb Aufgabe der vorliegenden Erfindung ein Verfahren bereitzustellen, mit dem legierte, insbesondere mehrfach legierte Aluminid- und Chromid-Schichten auch in Hohlräumen von Bauteilen, insbesondere Turbinenbauteilen, vorzugsweise Turbinenschaufeln in einer definierten Weise, insbesondere mit gleichmäßiger Schichtdicke abgeschieden werden können.

### TECHNISCHE LÖSUNG

Diese Aufgabe wird gelöst mit einem Verfahren mit den Merkmalen des Anspruchs 1 sowie einem Turbinenbauteil mit den Merkmalen des Anspruchs 11. Vorteilhafte Ausgestaltungen sind Gegenstand der abhängigen Ansprüche.

Der vorliegenden Erfindung liegt die Idee zugrunde, dass eine sogenannte Grünlingsschicht aus einem Bindemittel und Metallpartikeln als Basis für eine nachfolgende Alitierung oder Inchromierung dadurch in Hohlräumen in definierter Weise aufgebracht werden kann, dass eine Trennung der Abscheidung von Bindemittel und Metallpartikel vorgenommen wird. Entsprechend wird gemäß der Erfindung zunächst das Bindemittel auf dem zu behandelnden Bauteil aufgebracht und nachfolgend die Metallpartikel auf oder in der Bindemittelschicht abgeschieden.

Dies ermöglicht insbesondere eine gleichmäßige Alitierung oder Inchromierung von Hohlräumen von Bauteilen, wobei gleichzeitig ein oder mehrere Legierungskomponenten in der so erzeugten Aluminid- oder Chromid-Schicht eingebaut werden können.

Insbesondere kann das Bindemittel in einem ersten Schritt durch Tauchlackieren auf dem Bauteil aufgebracht werden und die Metallpartikel können in einem zweiten Schritt durch Bestäuben mit entsprechendem Metallpulver oder Einbetten des Bauteils in einem Pulverbett aus den abzuscheidenden Metallpartikeln aufgebracht werden.

Für die Beschichtung oder Oberflächenbehandlung von Hohlräumen bzw. deren Oberflächen kann die Tauchlackierung so erfolgen, dass der Hohlraum durch das niedrig viskose Bindemittel aufgefüllt wird und nachdem sämtliche Oberflächenbereiche des Hohlraums mit dem Bindemittel benetzt sind, das Bindemittel wieder aus dem Hohlraum entfernt wird. Auf der so an der Hohlraumoberfläche abgeschiedenen Bindemittelschicht lassen sich dann Metallpartikel abscheiden, die ebenfalls durch Einführen von Metallpulver, insbesondere feinkörnigem Metallpulver in den Hohlraum eingebracht werden können. Nach dem Entfernen des Pulvers aus dem Hohlraum verbleiben die Metallpartikel des Pulvers, die an der Bindemittelschicht anhaften an der Oberfläche des Hohlraums und bilden so eine entsprechende Grünlingsschicht.

Die entsprechenden Schritte mit Abscheiden einer Bindemittelschicht und Aufbringen von Metallpartikeln können so oft wiederholt werden, bis die erforderliche Schichtdicke erreicht ist.

Beispielsweise kann die Dicke der Grünlingsschicht 10 bis 150 Mikrometer betragen, wobei die Teilschichten der teilabgeschiedenen Grünlingsschichten im Bereich von drei bis fünf Mikrometer Schichtdicke liegen können, entsprechend der Partikelgröße der aufzubringenden Metallpartikel.

Das verwendete Metallpulver kann unterschiedliche Metallpartikel aufweisen, sodass mehrere Legierungskomponenten in die Grünlingsschicht eingebaut werden können. Darüber hinaus können in den Teilschritten unterschiedliche Metallpulver eingesetzt werden, sodass eine gradierte Grünlingsschicht und somit auch eine gradierte Aluminid- bzw. Chromid-Schicht erzeugt werden kann.

Die Grünlingsschicht kann nach jedem Teilschritt mit Abscheiden einer Bindemittelschicht und Aufbringen der Metallpartikel, nach mehreren derartigen Teilschritten oder nach Fertigstellung der Grünlingsschicht einer Wärmebehandlung unterzogen werden, um beispielsweise das Bindemittel zu trocknen und/oder teilweise oder ganz auszutreiben und die Metallpartikel in einem porösen Gebilde zusammenzubacken.

Die nachfolgende Alitierung bzw. Inchromierung kann nach bekannten Verfahren durchgeführt werden, wobei durch das Eindiffundieren des Aluminiums bzw. Chroms in die Grünlingsschicht und die Oberfläche des zu behandelnden Bauteils eine entsprechende Aluminid- bzw. Chromidschicht entsteht.

### KURZE BESCHREIBUNG DER FIGUREN

Die beigefügten Zeichnungen zeigen in rein schematischer Weise in
- Fig. 1: eine Schnittansicht durch ein Bauteil, welches gemäß der Erfindung behandelt wird;
- Fig. 2: das Bauteil aus Fig. 1 mit einem in einen Hohlraum eingefüllten Bindemittel;
- Fig. 3: das Bauteil aus den Figuren 1 und 2 mit einer abgeschiedenen Bindemittelschicht;
- Fig. 4: das in den Figuren 1 bis 3 gezeigte Bauteil mit eingefülltem Metallpulver;
- Fig. 5: das in den Figuren 1 bis 4 gezeigte Bauteil mit einer abgeschiedenen Grünlingsschicht; und in
- Fig. 6: eine Ansicht des Bauteils 1 gemäß den Figuren 1 bis 5 in einer Reaktionskammer für die Alitierung bzw. Inchromierung.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich.

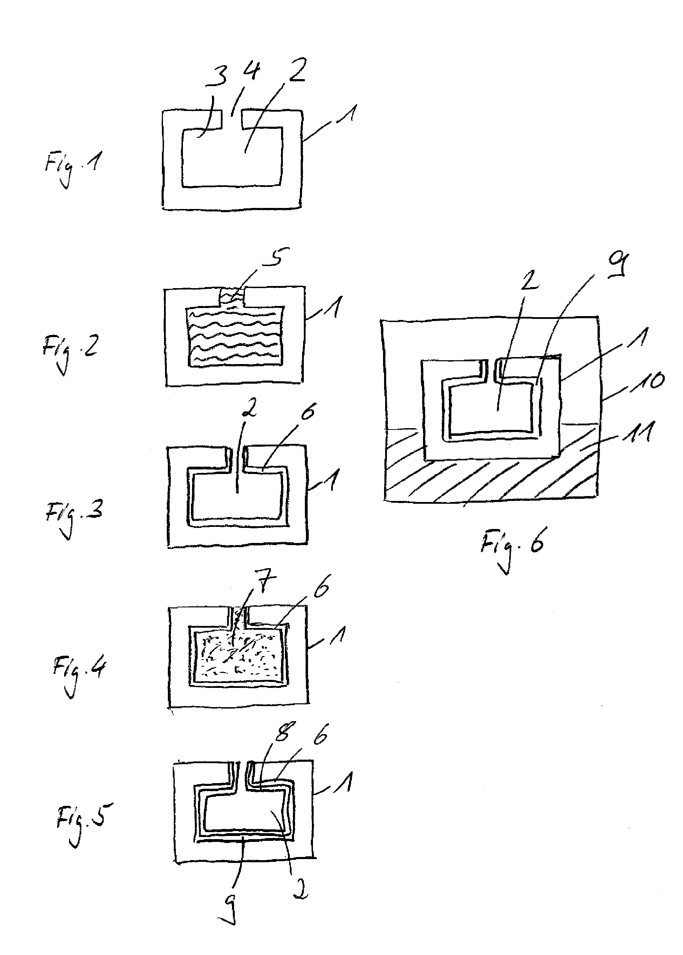

In Fig. 1 ist ein Bauteil 1 gezeigt, welches gemäß der vorliegenden Erfindung behandelt werden soll. Das Bauteil ist lediglich schematisch dargestellt und es ist selbstverständlich, dass reale Bauteile in verschiedensten Formen und Gestalten Verwendung finden können.

Das Bauteil 1 ist für das erfindungsgemäße Verfahren besonders geeignet, da das Bauteil 1 einen Hohlraum 2 aufweist, der beschichtet werden soll bzw. einer Oberflächenbehandlung unterzogen werden soll, wobei jedoch die Öffnung 4, die den Zugang zu dem Hohlraum 2 ermöglichen würde, derart klein ist oder in einer Art und Weise nachteilig angeordnet ist, so dass eine Beschichtung oder Oberflächenbehandlung des Hohlraums 2 schwierig bis gar unmöglich ist. Insbesondere in Bereichen von Hinterschneidungen 3, die nicht direkt durch die Öffnung 4 des Hohlraums zugänglich sind, sind Beschichtungs- oder Oberflächenbehandlungsverfahren, bei denen beispielsweise durch Spritzen oder dergleichen eine direkte unmittelbare und gerade Verbindung mit dem Behandlungswerkzeug erforderlich ist, gemäß bekannter Verfahren nicht durchführbar.

Nach dem erfindungsgemäßen Verfahren wird in dem Hohlraum 2 des Bauteils 1 ein Bindemittel 5 eingefüllt, sodass in Art einer Tauchlackierung die gesamte Oberfläche des Hohlraums 2 mit dem Bindemittel 5 benetzt ist. Dies ist in Fig. 2 gezeigt.

Nach Entleeren des Hohlraums 2 (s. Fig. 3) verbleibt ein Bindemittelfilm 6 an der Oberfläche des Hohlraums 2, da das Bindemittel 5 an der Oberfläche des Bauteils 1 haften bleibt.

Das so vorbereitete Bauteil 1 wird nun im nächsten Verfahrensschritt, welcher in Fig. 4 gezeigt ist, mit Metallpartikeln beaufschlagt. Die Metallpartikel liegen in Form eines Metallpulvers 7 vor, welches wiederum in den Hohlraum 2 eingefüllt wird (s. Fig. 4). Die Metallpartikel des Metallpulvers 7 können sich entsprechend in die Bindemittelschicht 6 einlagern und/oder auf dieser anhaften. Nach Entleeren des Hohlraums 2 verbleibt eine Grünlingsschicht 9, die entweder aus zwei Teilschichten, nämlich der Bindemittelschicht 6 und der Metallpartikelschicht 8 besteht oder aus einer Schicht, die eine Bindemittelmatrix aufweist, in welche Metallpartikel eingelagert sind. Selbstverständlich sind auch Kombinationen der entsprechenden Schichtausbildungen möglich.

Die Verfahrensschritte gemäß den Figuren 2 bis 5 können so oft wiederholt werden, bis die Grünlingsschicht 9 den gewünschten Aufbau hinsichtlich der Zusammensetzung und/oder der Schichtdicke aufweist. Sobald die Grünlingsschicht 9 fertig gestellt ist, also nachdem die letzten Pulverpartikel aufgebracht worden sind, kann das Bauteil 1 in einer Prozesskammer 10 einer Alitierung bzw. Inchromierung unterzogen werden. Dazu kann entsprechendes Alitier- bzw. Inchromierpulver 11 vorgesehen werden, welches zusammen mit der Atmosphäre, die in der Prozesskammer 10 eingestellt werden kann, das Aluminium bzw. Chrom zum Eindiffundieren in die Oberfläche des Bauteils 1 zur Verfügung stellt. Im Bereich des Hohlraums 2, in dem an der Oberfläche des Bauteils 1 die Grünlingsschicht 9 vorgesehen ist, bildet sich eine Aluminid- bzw. Chromidschicht mit den entsprechenden Metallkomponenten, die in der Grünlingsschicht angeordnet worden sind. Entsprechend bildet sich eine legierte Aluminid- bzw. Chromidschicht an der Oberfläche des Hohlraums 2 des Bauteils 1 aus.

Bei dem vorgestellten Verfahren kann natürlich nicht nur die Oberfläche des Hohlraums 2, wie in den Figuren 1 bis 6 dargestellt ist, entsprechend behandelt werden, sondern auch die außen liegenden Oberflächen des Bauteils 1. Allerdings ist das erfindungsgemäße Verfahren insbesondere für die Oberflächenbehandlung von Hohlräumen geeignet, sodass die Darstellung auf den Hohlraum beschränkt worden ist. Allerdings ist selbstverständlich, dass das Bauteil 1 auch an den Außenseiten entsprechend dem Verfahren behandelt werden kann. Darüber hinaus ist es auch möglich die Außenseiten des Bauteils 1, die direkt zugänglich sind mit anderen geeigneten Verfahren zu behandeln.

Bei der Herstellung der Grünlingsschicht 9 kann zwischen einzelnen Teilschritten, also der Abscheidung einer Bindeschicht und einer Metallpartikelschicht, und/oder nach Abscheidung der letzten Metallpartikel ein Wärmebehandlungsschritt durchgeführt werden, der zum Trocknen und/oder Verflüchtigen des Binders eingesetzt wird und der dazu führen kann, dass die Metallpartikel als poröse Grünlingsschicht in einer Art Sinterkörper auf der Oberfläche des Bauteils 1 vorliegen.

Bei dem erfindungsgemäßen Verfahren können in den jeweiligen Teilschritten zur wiederholten Aufbringung von Metallpartikeln unterschiedliche Metallpartikelpulver eingesetzt werden, die sich beispielsweise hinsichtlich der Größe der Metallpartikel und/oder der Zusammensetzung der Metallpartikel unterscheiden, sodass eine gradierte Aluminid- oder Chromidschicht aufgebracht werden kann.

Darüber hinaus ist es selbstverständlich, dass das Metallpulver 7 unterschiedliche Metallpartikel umfassen kann, wobei auch hier die Metallpartikel sich in ihrer Größe und/oder chemischen Zusammensetzung unterscheiden können, sodass mehrfach legierte Aluminid-oder Chromidschichten erzeugt werden können.

Obwohl die vorliegende Erfindung anhand des Ausführungsbeispiels detailliert beschrieben worden ist, ist die Erfindung nicht auf dieses Ausführungsbeispiel beschränkt, sondern es können im Rahmen des Schutzbereichs der beigefügten Ansprüche Abwandlungen durch andersartige Kombinationen von einzelnen vorgestellten Merkmalen oder durch Weglassen einzelner Merkmale vorgenommen werden. Insbesondere umfasst die vorliegende Offenbarung sämtliche Kombinationen aller vorgestellter Einzelmerkmale.

## Patentansprüche

1. Verfahren zum Herstellen legierter, insbesondere mehrfach legierter Aluminid- oder Chromidschichten auf einem Bauteil mittels Alitieren oder Inchromieren, bei welchem auf dem zu beschichtenden Bauteil (1) zunächst eine Grünlingsschicht (9) aus einem Bindemittel (5) und Metallpartikeln (7) abgeschieden wird und anschließend eine Alitierung oder Inchromierung durchgeführt wird,
**dadurch gekennzeichnet, dass**
Bindemittel und Metallpartikel getrennt voneinander auf dem Bauteil abgeschieden werden, wobei zuerst das Bindemittel aufgebracht wird und nachfolgend die Metallpartikel auf oder in der Bindemittelschicht abgeschieden werden.

2. Verfahren nach Anspruch 1,
**dadurch gekennzeichnet, dass**
das Bindemittel in einem ersten Schritt durch Tauchlackieren auf dem Bauteil aufgebracht wird und die Metallpartikel in einem zweiten Schritt durch Bestäuben oder Einbetten des Bauteils in einem Pulverbett aus den abzuscheidenden Metallpartikeln aufgebracht werden.

3. Verfahren nach Anspruch 1 oder 2,
**dadurch gekennzeichnet, dass**
die Schritte der Aufbringung des Bindemittels und des Abscheidens der Metallpartikel mehrfach wiederholt werden.

4. Verfahren nach einem der vorhergehenden Ansprüche,
**dadurch gekennzeichnet, dass**
die Grünlingsschicht (9) nach Aufbringung der letzten Metallpartikel oder nach mehreren oder jedem Teilschritt der Aufbringung der Metallpartikel einer Wärmebehandlung unterzogen wird.

5. Verfahren nach einem der vorhergehenden Ansprüche,
**dadurch gekennzeichnet, dass**
das Verfahren bei Bauteilen (1) mit Hohlräumen (2) und/oder Hinterschneidungen eingesetzt wird.

6. Verfahren nach Anspruch 5,
**dadurch gekennzeichnet, dass**
der Schritt der Aufbringung des Bindemittels durch Einfüllen des Bindemittels in einen Hohlraum und der Schritt des Abscheidens der Metallpartikel durch Einfüllen eines Pulvers aus den abzuscheidenden Metallpartikeln in den Hohlraum (2) durchgeführt wird.

7. Verfahren nach einem der vorhergehenden Ansprüche,
**dadurch gekennzeichnet, dass**
die Grünlingsschicht (9) in einer Dicke von 10 bis 150 µm abgeschieden wird, wobei insbesondere Teilschichten mit einer Schichtdicke von jeweils 3 bis 5 µm nacheinander abgeschieden werden.

8. Verfahren nach einem der vorhergehenden Ansprüche,
**dadurch gekennzeichnet, dass**
eine gradierte Grünlingsschicht (9) abgeschieden wird.

9. Verfahren nach einem der vorhergehenden Ansprüche,
**dadurch gekennzeichnet, dass**
die Metallpartikel mehrere hinsichtlich der chemischen Zusammensetzung unterschiedliche Metallpartikel umfassen.

10. Verfahren nach einem der vorhergehenden Ansprüche,
**dadurch gekennzeichnet, dass**
als Bauteil ein Turbinenbauteil für eine Gasturbine, insbesondere ein Flugtriebwerk, vorzugsweise eine Turbinenschaufel eingesetzt wird.

11. Turbinenbauteil mit mindestens einem Hohlraum, insbesondere Turbinenschaufel mit Kühlkanälen oder dergleichen,
**dadurch gekennzeichnet, dass**
im Hohlraum eine legierte Aluminid- oder Chromidschicht auf der Oberfläche des Turbinenbauteils ausgebildet ist.

12. Turbinenbauteil nach Anspruch 1,
**dadurch gekennzeichnet, dass**
die Aluminid- oder Chromidschicht eine gleichmäßige Schichtdicke aufweist.
